# EUROPEAN PATENT SPECIFICATION

(11) **EP 4 409 941 B1**
(45) Date of publication and mention of the grant of the patent: **05.11.2025**
(21) Application number: 22786046.7
(22) Date of filing: 28.09.2022
(51) Int. Cl.: H04W 4/30, H04W 4/80

(54) **ELEVATOR SYSTEM, METHOD OF OPERATING AN ELEVATOR SYSTEM, AND USE OF A CONTROL UNIT, A USER INTERFACE UNIT, AND A FIRST ACCESS POINT IN AN ELEVATOR SYSTEM**
AUFZUGSSYSTEM, VERFAHREN ZUM BETRIEB EINES AUFZUGSSYSTEMS UND VERWENDUNG EINER STEUEREINHEIT, BENUTZERSCHNITTSTELLENEINHEIT UND EINES ERSTEN ZUGANGSPUNKTS IN EINEM AUFZUGSSYSTEM
SYSTÈME D'ASCENSEUR, PROCÉDÉ DE FONCTIONNEMENT D'UN SYSTÈME D'ASCENSEUR ET UTILISATION D'UNE UNITÉ DE COMMANDE, D'UNE UNITÉ D'INTERFACE UTILISATEUR ET D'UN PREMIER POINT D'ACCÈS DANS UN SYSTÈME D'ASCENSEUR

(30) Priority: 30.09.2021 EP 21200155
(43) Date of publication of application: 07.08.2024
(73) Proprietor: INVENTIO AG, 6052 Hergiswil (CH)
(72) Inventor: ZOTTI, Teresa, 6030 Ebikon (CH); PERFETTO, Antonio, 6030 Ebikon (CH)
(74) Representative: Inventio AG
(86) International application number: PCT/EP2022/077027
(87) International publication number: WO 2023/052455

(56) References cited:
- EP-A1- 3 477 912
- US-A1- 2019 393 950
- US-A1- 2020 189 877

## Description

The present invention relates to an elevator system, particularly an elevator system suitable for passenger transport, and a method of operating an elevator system. Components of the elevator system can be configured for wireless communication therebetween.

Modern elevator systems often employ wireless communication between components of the elevator system, since wireless communication can offer several advantages compared to wire-based communication technologies. Such components can include user interfaces, such as car or landing operating panels, door controllers, control units, sensors or the like. At least some components are typically installed in the elevator car and thus mobile. The components are typically connected to access points as clients in the wireless network, the access points being provided at one or more suitable locations.

In elevator systems, constant signal coverage of the mobile components must be provided at every potential location of the mobile component. In cases where the complete elevator system, e.g. along the complete length of an elevator shaft, cannot be covered by a single access point, e.g. due to signal range limitations, multiple access points may be placed at different locations. However, when a mobile component travels within the elevator system, a handover between access points, i.e. a client device disconnecting from a first access point and connecting to a second access point, can lead to an interruption of the connection between the component and the access point until the handover is completed. Such interruptions are undesirable and can, in worst-case scenarios where the handover is delayed or fails, result in travel delays or service interruptions.

An important safety aspect of elevator systems for passenger transport is an alarm function. In case of an emergency or service interruption, passengers can typically send an alarm and/or reach an operator from the car, thus improving the safety of the elevator system.

However, if the access point is unreachable, e.g. due to a disruption of the wireless network such as during a handover between access points, the alarm function may not be available if it relies on the wireless communication between the component providing the alarm function and the access point. Furthermore, if the alarm function depends on the operation of a second component, such as a control unit connecting the component providing the alarm function to the wireless network, the alarm function is not available if the second component fails.

Prior art document US 2020/189877 A1 discloses the use of a dual path wireless communication between an elevator car and a building central controller.

Thus, there is a need for an improved elevator system providing safe and reliable wireless communication between components of the elevator system and a wireless access point, preferably while providing a reliable alarm function. Such needs may be met with the subject-matter of the independent claims. Advantageous embodiments are defined in the dependent claims and the specification that follows.

According to an aspect, an elevator system is described. The elevator system includes a control unit, a user interface unit, and a first access point unit. The control unit moves with an elevator car of the elevator system. The user interface unit is a car operating panel provided within the elevator car of the elevator system, wherein the car operating panel includes an interface configured for user interaction. The first access point unit is configured as an access point of a first wireless network. The first access point unit and the user interface unit are configured to communicate within the first wireless network. The control unit includes a second access point unit, the second access point unit being configured as an access point of a second wireless network. The second access point unit is configured to communicate with a plurality of client devices within the second wireless network, wherein the plurality of client devices comprises at least one selected from the group consisting of: an elevator car door controller, a landing door controller, and/or a landing operating panel. The first access point unit and the user interface unit are configured for sending and receiving an alarm signal therebetween within the first wireless network independent of the control unit. Further, the control unit is communicatively connected to the first access point unit for communicating with the user interface unit.

By configuring the user interface unit to wirelessly communicate with the first access point unit, the communication between the first access point unit and the user interface unit is independent of the control unit, which includes the second access point unit. The user interface unit is thus able to communicate - e.g. an alarm signal - with the first access point unit even if the control unit is unavailable, e.g due to a failure of the control unit.

According to an aspect, a method of operating an elevator system is described. The elevator system includes a control unit, a user interface unit, and a first access point unit. The control unit moves with an elevator car of the elevator system. The user interface unit is a car operating panel provided within the elevator car of the elevator system, wherein the car operating panel includes an interface configured for user interaction. The method includes communicatively connecting the first access point unit and the user interface unit in a first wireless network. The method further includes communicatively connecting the control unit to the first access point unit for communicating with the user interface unit, and communicatively connecting the control unit with at least a first client device of a plurality of client devices in a second wireless network, wherein the plurality of client devices comprises at least one selected from the group consisting of: an elevator car door controller, a landing door controller, and/or a landing operating panel. The control unit includes a second access point unit of the second wireless network. The method further includes recording a user input signal representing a user input with the user interface unit and transmitting the user input signal from the user interface unit to the first access point unit within the first wireless network and from the first access point unit to the control unit.

According to an aspect, a use of a control unit, a user interface unit and a first access point unit according to embodiments in an elevator system is described.

According to an aspect, a wireless network, such as the first wireless network or the second wireless network, is described. The wireless network can include an access point, such as the first access point or the second access point. An access point and a client device can establish a wireless connection therebetween and communicate wirelessly via the wireless connection, i.e. be communicatively connected. Wireless communication typically includes the sending and receiving of radio signals. An access point and/or a client device may include a radio module configured for sending and receiving radio signals, particularly radio signals according to a communication protocol of the wireless network. The access point can be configured for establishing a wireless connection with several client devices. The access point can be configured for establishing a connection between client devices, i.e. communicatively connect the client devices, particularly in a wireless network. The wireless network can enable a transmission of data between client devices, e.g. by transmitting data from a first client device to the access point and subsequently transmitting data from the access point to a second client device. The access point can include a router for routing data or data packets between client devices, or between client devices of the wireless network and a further network communicatively connected to the access point. The access point, particularly the first access point according to embodiments described herein, can be an edge device, a wireless gateway, a wireless access point or the like. The access point, particularly the first access point according to embodiments described herein, can connect the wireless network to an outside network, such as a medium area or wide area network, such as the internet. The access point, particularly the second access point according to embodiments described herein, can connect a first wireless network to a second wireless network, such as the first wireless network and the second wireless network according to embodiments described herein. Examples for wireless networks, such as wireless networks suitable for communication between clients and/or access points, include wireless local area networks, such as networks according to the IEEE 802.11 WLAN standards.

According to embodiments, additionally or alternatively, two or more client devices ("clients") within the wireless network, or all clients within the network, can be configured to communicate directly between each other, i.e. the wireless network may be configured for communication that does not strictly require transmitting data via an access point. Examples for such wireless networks are mesh networks, such as AdHoc networks. In mesh networks according to embodiments, an access point may be a client in the mesh network providing a connection between the mesh network and a further network, e.g between the first wireless network and the second wireless network, or between the (first) wireless network and an outside network, such as a wide area network, such as the internet.

According to an aspect, a control unit is described. The control unit according to the invention moves with the elevator car. Preferably, the control unit can be a car control unit (CCU). The control unit can control functions of the elevator system.

The control unit may be provided in or on the elevator car. The control unit can be communicatively connected with sensors and/or input devices, such as door sensors or landing operating panels, to receive input signals. The control unit can be communicatively connected with controllers, such as door controllers for controlling the opening or closing of the elevator car door or the landing door, a power node for controlling the elevator drive system, or the like. The control unit can, e.g. based on user inputs received e.g. via the landing operating panels or the cabin operating panel, calculate a route of the elevator car and operate the elevator system to move the elevator car within the elevator shaft according to the calculated route. The control unit may be a car control unit and may include further or alternative functions than those described above.

According to a preferred embodiment, the control unit is configured to communicate within the first wireless network. Alternatively or additionally, the control unit is configured to communicate with the first wireless network over a wired connection to the first access point unit.

According to a preferred embodiment, at least one of the plurality of client devices is configured to communicate with the second access point unit within the second wireless network.

According to a preferred embodiment, the user interface unit comprises an alarm call function, a microphone and/or a loudspeaker.

According to a preferred embodiment, the first access point unit is stationary with respect to the elevator system.

According to a preferred embodiment, the control unit comprises first radio module for transmitting and receiving information within the first wireless network.

According to a preferred embodiment, the control unit comprises second radio module for transmitting and receiving information within the second wireless network.

According to a preferred embodiment, the first wireless network and the second wireless network operate on different frequency bands or different channels.

Reference will now be made in detail to the various embodiments, one or more examples of which are illustrated in the figures. Within the following description of the drawings, the same reference numbers refer to same components. Generally, only the differences with respect to individual embodiments are described. Each example is provided by way of explanation and is not meant as a limitation. Further, features illustrated or described as part of one embodiment can be used on or in conjunction with other embodiments to yield yet a further embodiment. It is intended that the description includes such modifications and variations.
Fig. 1 shows a schematic elevator system according to an embodiment;
Fig. 2 shows a first wireless network in an elevator system according to an embodiment;
Fig. 3 shows a second wireless network in an elevator system according to an embodiment;
Fig. 4 shows a method of operating an elevator system according to an embodiment;
   and
Fig. 5 shows a first wireless network in an elevator system according to an embodiment.

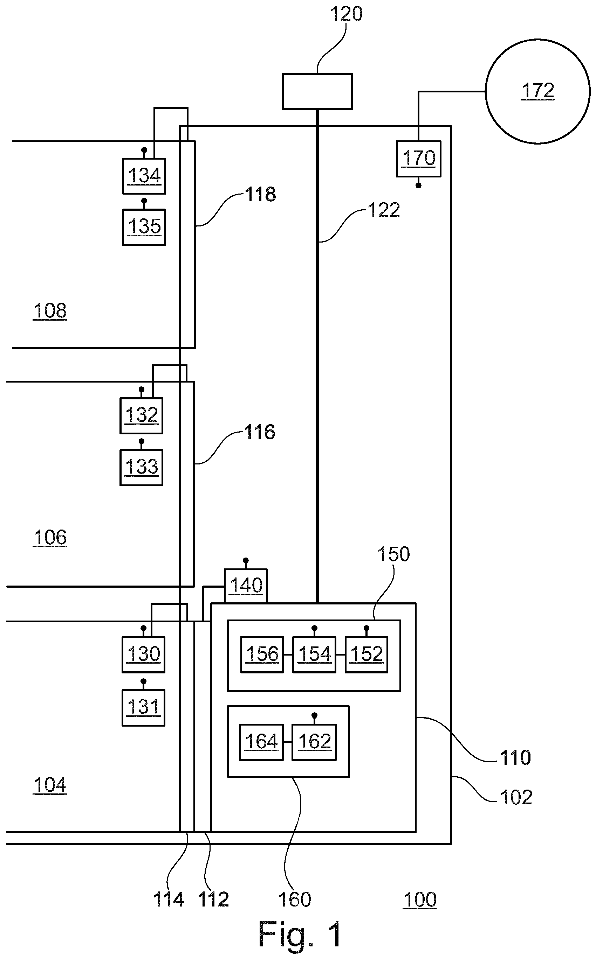

Fig. 1 shows an elevator system 100 having an elevator shaft 102 and an elevator car 110 movably provided in the elevator shaft 102. The elevator car 110 is suspended on a cable 122 which is driven by the drive system 120. Some components of the drive system, such as rollers or counterweights, have been omitted in the figures for clarity. Further drive systems other than the cable-based drive system 120 may be suitable, and the described subject-matter is not limited to the type of drive system shown in the figures.

As shown in Fig. 1, the elevator system 100 has three landings 104, 106 and 108 on different levels, e.g. within a building. The number of landings is exemplary and may be higher or lower. The benefits of the invention may become even more apparent in elevator systems with a large number of landings, e.g. a long elevator shaft 102. The elevator system 100 may have more than 3 landings, more than 5 landings, more than 10 landings or even more than 15 landings.

Each landing 104, 106, 108 has a landing operating panel (LOP) 131, 133, 135 provided near the landing doors 114, 116, 118. The LOP 131, 133, 135 can be configured for allowing a user to interact with the elevator system 100, e.g. call an elevator to the landing. The LOP 131, 133, 135 can be configured for displaying information about the elevator system 100, such as the current position of the elevator car 110, to the user. The LOP 131, 133, 135 can be configured for sending and receiving signals, such as user inputs (e.g. user calls) and/or elevator status information (e.g. a position of the elevator car 110) to and from a unit such as the control unit 150 via a wireless network.

Each landing 104, 106, 108 has a landing door controller 130, 132, 134 configured for controlling the operation of the landing doors 112, 114, 116. The landing door controller 130, 132, 134 can be configured for controlling the opening or closing of the landing doors 114, 116, 118, e.g. by controlling a motor of the landing door 114, 116, 118, and/or by receiving sensor signals of sensors (not shown) provided in the landing door 114, 116, 118. The landing door controller 130, 132, 134 can be configured for receiving a door opening signal or command, e.g. from the control unit 150, via a wireless network. The landing door controller 130, 132, 134 can be configured for providing information, such as status information, to a receiving unit such as the control unit 150 via a wireless network.

As shown in Fig. 1, the elevator car 110 resides on the lowest landing 104 in a position suitable for passengers to enter or exit the elevator car 110. The elevator car 110 has an elevator car door controller 140. The elevator car door controller 140 is configured for controlling the operation of the elevator car door 112. The elevator car door controller 140 can be configured for controlling the opening or closing of the elevator car door 112, e.g. by controlling a motor of the elevator car door 112, and/or by receiving sensor signals of sensors (not shown) provided in the elevator car door 112. The elevator car door controller 140 can be configured for receiving a door opening signal or command, e.g. from the control unit 150, via a wireless network. The elevator car door controller 140 can be configured for providing information, such as status information, to a receiving unit such as the control unit 150 via a wireless network.

The elevator system 100 has a user interface unit 160. The user interface unit 160 can be provided in the elevator car 110. The user interface unit 160 can include a car operating panel (COP) and provide an interface 164 to the user or passenger of the elevator car 110. The user interface unit 160 can be configured for allowing a user to interact with the elevator system 100, e.g. such as select a destination floor after entering the elevator car 110. The LOP 131, 133, 135 can be configured for displaying information about the elevator system 100, such as the current position of the elevator car 110, to the user.

The user interface unit 160 may include an alarm function. The user interface unit 160 may be configured for allowing the user to send an alarm call. The alarm call may include bidirectional communication, e.g. the user interface unit 160 may allow sending an alarm call and receiving a response, such as a display message or a voice response. The user interface unit 160 may be configured for providing a telephone-like communication between the passenger and e.g. a support technician at a remote location, such as a support center. The telephone-like communication might also include a video connection. According to embodiments, as shown in Fig. 1, the user interface unit 160 may include an interface 164. The interface can include a (touch) display, an entry system such as push buttons or a keyboard, a sound generating module such as a loudspeaker, a sound input module such as microphone and/or a communications module, e.g. for connecting to secondary devices, such as passenger-carried devices, such as smart phones, smart watches, tablets, keycards or the like.

As shown in Fig. 1, the elevator car 110 has a control unit 150. The control unit 150 may be provided within the elevator car 110, i.e. within the cabin, such as e.g. behind a panel within the elevator car 110 accessible from within the cabin. The control unit 150 may also be provided on the outside of the elevator car 110, e.g. on the roof of the elevator car 110. Preferably, the control unit 150 is provided on the elevator car and/or moves with the elevator car. Preferably, the control unit 150 may be accessible by a technician for easy maintenance, repair or replacement. The control unit 150 may include a controller 156, such as a microcomputer, for controlling the elevator system 100 or the operation of the elevator system 100 or its components according to embodiments or aspects described herein. The control unit 150, particularly the controller 156, may be communicatively connected to the drive system 120 or a controller of the drive system (not shown), such as a power node, for controlling the drive system. The connection between the control unit 150 and the drive system 120 may be provided via the first wireless network 210, the second wireless network 310, or a combination of the first and second wireless network 210, 310 according to embodiments described herein. The connection between the control unit and the drive system may further be provided by an alternative or additional communicative connection, such as a dedicated connection, such as a wired connection or a (wired) ethernet connection.

The control unit 150 or the controller 156 of the control unit 150 may be configured as or include a safety device, e.g. according to standards IEC 61508, PESSRAL or Safety In-tegriy Level (SIL). The control unit 150 or the controller 156 of the control unit 150 may be a main control unit of the elevator system 100, the main control unit of the elevator system controlling some, most, or all functions required for the operation of the elevator system 100.

As shown in Fig. 1, the elevator system 100 has a first access point unit 170. The first access point unit 170 is stationary provided at a suitable location, such as near the top of the elevator shaft 102. A suitable location of the first access point unit 170 other than the location shown in Fig. 1 may be chosen for each elevator installation, and may include any point within or in the vicinity of the elevator shaft 102. A suitable location preferably allows the constant transmission of a radio signal of the first wireless network 210 between the elevator car 110, particularly the user interface unit 160 and optionally the control unit 150, and the first access point unit 170. As shown in Fig. 1, the first access point unit 170 is communicatively connected to the network 172. The network 172 may be a wide area network, such as the internet. The connection to the network 172 might be provided by a mobile phone network technology or any other suitable network technology. The connection to the network 172 might be provided by a wired or wireless network. The first access point unit 170 is configured as an access point of a first wireless network 210, and may function as an edge device and/or gateway between the first wireless network 210 and the network 172, e.g. the first access point unit 170 may provide a connection between clients of the first wireless network 210 within the first wireless network 210, and/or provide a connection between clients of the first wireless network 210 and the network 172. The first access point unit 170 may be the only access point unit of the first wireless network 210.

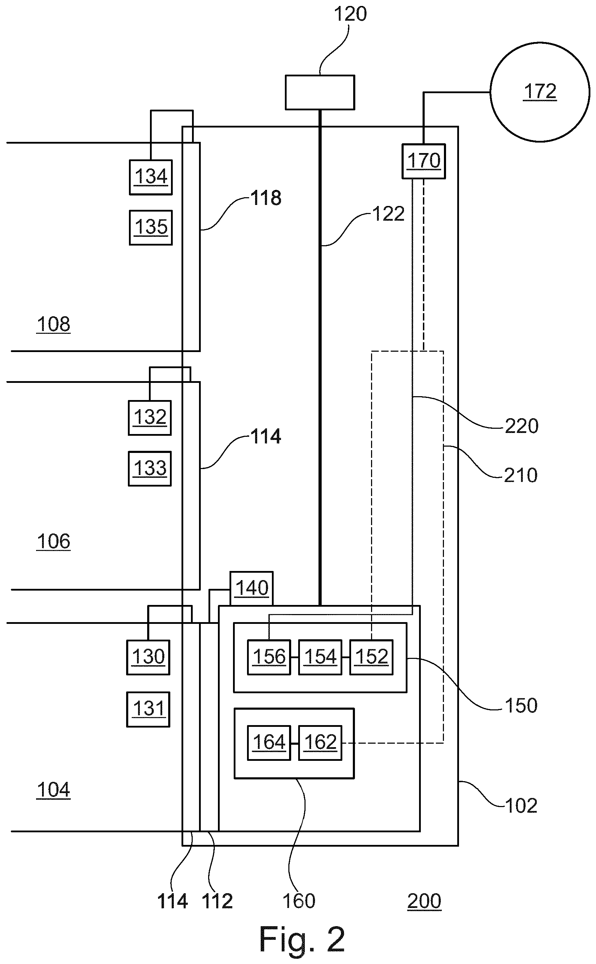

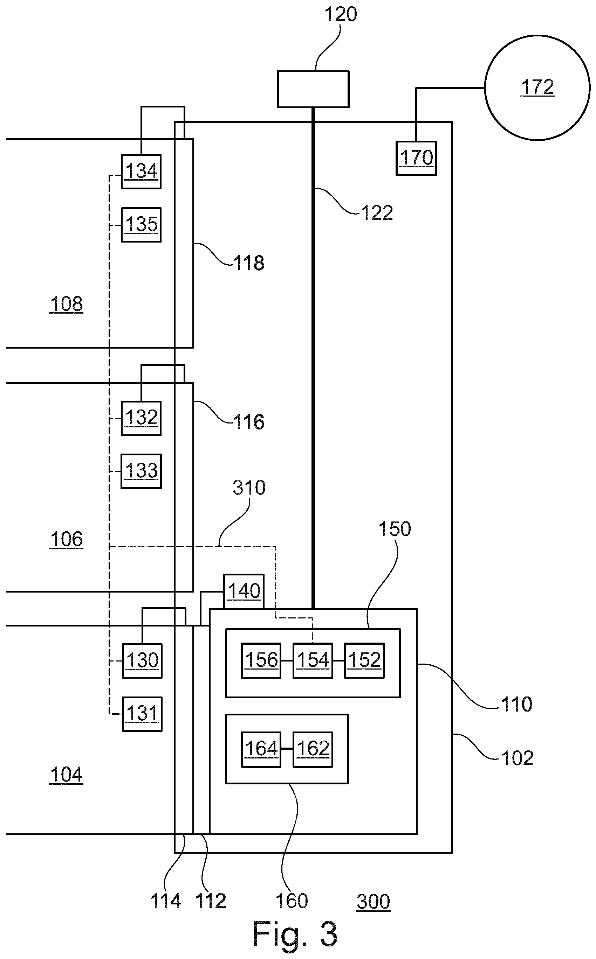

Referring now to Fig. 2, Fig. 3 and Fig. 5, the first wireless network 210 and the second wireless network 310 shall be described in further detail. The elevator system 200 shown in Fig. 2 has the first wireless network 210 established, and the elevator system 300 shown in Fig. 3 has the second wireless network 310 established. The elevator systems 200 and 300 may be the elevator system 100 as shown in Fig. 1 in the shown configurations or states. The elevator systems 200 and 300 may be the same elevator system. The elevator systems 200 and 300 may exist at the same time, i.e. the wireless networks 210 and 310 may be established together or independently from one another at the same time.

In Fig. 2, Fig. 3 and Fig. 5, the communicative connections within the wireless networks 210, 310 are depicted as dotted lines in a bus-like topology for clarity. It should be understood that this does not limit the described embodiments to specific network topologies, i.e. in some embodiments, a communicative connection within the wireless network may be provided by a radio communication between a client device, or a number of individual client devices, and an access point, and not by a radio communication between a client device and another client device. In further embodiments, the connected devices, particularly the devices connected to the second wireless network 310, may be, at least in part, transiently connected. For example, the landing door controller 134 or the landing operating panel 135 shown in Fig. 3 may be, at times, disconnected from the second wireless network 310 due to a signal interruption, e.g. due to the physical distance of the third level landing 108 to the elevator car 110 on the first level, particularly the second radio module 154 being configured as a second access point unit configured as the second access point of the second wireless network. In embodiments, a secondary connection, e.g. between a disconnected landing operating panel 131, 133, 135 and the control unit 150 may be provided by an alternative connection (not shown), e.g. a connection to a building wireless network. A signal, such as a call entered by the user at the landing operating panel 131, 133, 135, may be transmitted over the alternative connection and/or via the internet and be receivable by the control unit 150 via the first wireless network 210, or even the wired connection 220. The signal may also be stored, held and/or repeated until a connection with the second access point is (re)established.

Referring now to Fig. 2, the first wireless network 210 is explained in further detail. The first access point unit 170 is configured as an access point of the first wireless network. According to embodiments, the control unit 150 has a first radio module 152 configured for transmitting and receiving information within the first wireless network 210. The first radio module 152 can be configured for communicatively connecting the control unit 150 as a client device within the first wireless network 210. The user interface unit 160 has a user interface radio module 162. The user interface radio module 162 can be configured for communicatively connecting the user interface unit 160 as a client device within the first wireless network 210. Communication within the first wireless network can be managed or controlled by the first access point unit 170, e.g. according to a wireless communication protocol, e.g. according to IEEE 802.11. The first wireless network 210 can be configured to operate on a first frequency band, such as the 2.4 GHz band. In a beneficial example, the first wireless network 210 can be configured for reliable communication, such as by ensuing that no further wireless networks or communication devices within the elevator system 200 operate at the frequency band or on the same channel within the frequency band of the first wireless network, and/or by adjusting the signal strength of the first access point unit 170, the first radio module 152 and the user interface radio module 162 to be sufficiently high for reliable communication at any point or location within the elevator shaft 102, and/or by utilizing directional antennas that maintain a high signal-to-noise ratio between the first radio module 152, the user interface radio module 162 and the first access point unit 170.

By ensuing that the first wireless network 210 includes a limited number of client devices and/or by operating the first wireless network 210 on a dedicated and/or reserved frequency band, signal interference between these devices and/or further wireless devices may be limited. This can improve the overall signal quality and may beneficially allow that a constant, reliable connection can be maintained between the client devices and the first access point unit 170. Furthermore, the alarm function integrated into the user interface unit 160 may be utilized even when the control unit 150 is unavailable, e.g. due to failure of the control unit 150, or the first radio module 152. Thus, even in situations where the elevator system 200 is inoperable, a user may send an alarm call with the user interface unit 160, the alarm call being transmitted via the first wireless network 210 and the network 172.

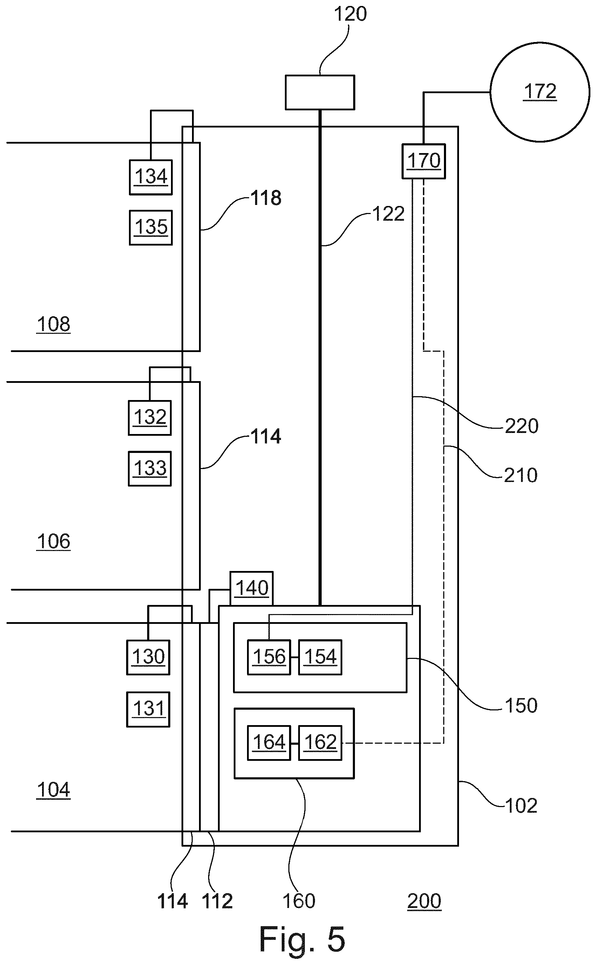

As shown in Fig. 2 and Fig. 5, according to embodiments, a wired connection 220 may be provided between the control unit 150 and the first access point unit 170. The wired connection 220 may communicatively connect the control unit 150 and the first access point unit 170.

The wired connection 220 may be provided in addition to the wireless connection of the first wireless network 210, i.e. the connection provided by the first radio module 152, or may even be provided instead of the wireless connection. In case the wired connection 220 is provided instead of the wireless connection, the respective first radio module 152 might also be omitted as shown in Fig. 5.

As shown in Fig. 2 and Fig. 5, the wired connection 220 may be formed between the controller 156 and the first access point unit 170. The controller 156 may include a networking module, such as an ethernet module, for enabling the wired connection 220. In embodiments, the control unit 150 may, e.g. in addition to the first radio module 152 and the second radio module 154, include a networking module, such as an ethernet module. The networking module may be communicatively connected to the controller 156 for allowing the controller 156 to communicate with the first access point unit 170 via the wired connection 220. The first access point unit 170 may include a networking module, such as an ethernet module, for enabling the wired connection 220. The wired connection 220 may be an ethernet connection.

The first access point unit 170 may be configured for routing data, such as data packets, such as TCP/IP or UDP packets, between the first wireless network 210 and the wired connection 220. The devices connected in the first wireless network 210 and the devices connected by the wired connection 220, particularly the networking modules of the control unit 150 and the first access point unit 170, may have addresses, such as IP addresses, assigned thereto, and the addresses may be comprised within the same address space, i.e. be included in the same network. The control unit 150 may be communicatively connected to the first wireless network 210 via the first radio module 156 and, additionally or alternatively, via the wired connection 220. Connecting the first access point unit 170, the control unit 150 and the user interface unit 160 in a first wireless network 210 may include connecting the control unit 150 and the first access point unit 170 via the wired connection 220, and routing data between the wired connection 220 and the first wireless network 210. Providing a wired connection 220, particularly in combination with a wireless connection in the first wireless network 210, between the first access point unit 170 and the control unit 150 can result in a more reliable and/or failure-proof communication between the first access point unit 170 and the control unit 150, thereby increasing the safety of the elevator system.

Referring now to Fig. 3, the second wireless network 310 is explained in further detail. The control unit 150 includes a second access point unit, the second access point unit having a second radio module 154 different from the optional first radio module 152. The second radio module 154 may itself operate as the access point of the second wireless network 310, or may be operated by the controller 156 as the access point of the second wireless network 310. The second access point unit includes the second radio module 154, and may further include the controller 156. The second access point unit is configured as an access point of the second wireless network 310. The second access point is configured to communicate with a plurality of client devices within the second wireless network 310. Client devices include, but are not limited to, the elevator car door controller 140, the landing door controllers 130, 132, 134, the landing operating panels 131, 133, 135, one or more landing lanterns, information displays, acoustic signaling devices or the like, that may be provided at the landings 104, 106, 108. Compared to the first access point unit 170, the second wireless network, particularly the client devices and/or the second access point unit or second radio module 154 may operate at a lower signal strength or at a lower transmit signal power, e.g. a signal strength or transmit signal power that is at least 2, 3, 5, 10 or even 20 times lower than the signal strength or signal transmit power of the first access point unit 170. Consequently, the signal range of the second access point unit or the second radio module 154 and the client devices connected thereto may be lower than that of the access point or client devices of the first wireless network 210. The signal range of the second wireless network 310 may be the range over which a client device can reliably communicate with the second access point unit including the second radio module 154. A signal range of devices within the second wireless network may beneficially be chosen such that a reliable communication is available for the landing adjacent to the elevator car, and, in further embodiments, even the landings below and above the landing adjacent to the elevator car. A reliable communication between the control unit 150 and the client devices of the adjacent landing, i.e. the landing 104 in Fig. 3, may be required for the reliable operation of the landing door. However, a communication between the control unit 150 and the client devices of a remote landing, such as landing 108 in Fig. 3, may not be required, since remote landing doors generally do not need to be opened.

Communication within the second wireless network can be managed or controlled by the second access point unit including the second radio module 154, e.g. according to a wireless communication protocol, e.g. according to IEEE 802.11. The second wireless network 310 can be configured to operate on a second frequency band, such as the 5 GHz band. The second wireless network 310 can be configured to operate on the same frequency band, such as the 2.4 GHz band, as the first wireless network 210 on a different channel than the second wireless network 310. By operating on a different frequency band or a different channel than the first wireless network 210, an interference between the first and the second wireless network 210, 310 can be reduced or avoided.

In embodiments, the control unit 150 may operate as a gateway between the first wireless network 210 and the second wireless network 310. In one example, a user may enter a call at one of the LOPs 131, 133, 135, and/or a sensor signal may be provided by one of the landing door controllers 130, 132, 134. The call or sensor signal may be transmitted through the second wireless network, either by directly connecting to the second access point unit of the control unit 150 though the second radio module 154 (if the second radio module is in range and the LOP is connected), or, if the second wireless network 310 is configured as a mesh network, by forwarding the communication, such as a data packet including the call instruction or sensor signal, through one of the client devices of the second wireless network 310. The control unit 150 may then process the call or sensor signal in the controller 156 and operate the elevator system 100, 200, 300 accordingly. Furthermore, the call or sensor signal may be forwarded by the control unit 150 through the first wireless network 210 to the user interface unit 160 to display information corresponding to the call or sensor signal on the interface 164. In another example, the call or sensor signal may be forwarded to an external server connected to the network 172, e.g. for monitoring the elevator system 100, 200, 300.

According to embodiments, the first wireless network 210 and the second wireless network 310 may operate independently from each other and not be configured for any direct exchange of data therebetween. Such a configuration may be chosen to isolate the first wireless network 210 from the second wireless network 310 to increase the security and/or reliability of the first wireless network 310.

According to embodiments, each device described herein, such as the control unit 150, the user interface unit 160, the first access point unit 170, and any client device, such as an elevator car door controller 140, a landing door controller 130, 132, 134, a landing operating panel 131, 133, 135, a landing lantern or the like, may include a radio module such as the first radio module 152 or the second radio module 154. Each device described herein may further include a controller, such as a microcontroller, a microcomputer, a logic circuit or the like, to execute the functions or operations associated with the device. The controller may include a software memory configured for storing software programs thereon, and the controller may be configured for executing said software program. The radio module, alone or in combination with the controller, may operate, depending on the device, as a client or an access point in a wireless network, such as the first wireless network 210 or the second wireless network 310. The radio module may send and/or receive radio signals as specified in a wireless network protocol, such as an IEEE 802.11 protocol. The radio module may be configured for encoding and/or decoding information, signals, data or data packets to be transmitted as radio signals according to the wireless network protocol. The radio module may be communicatively connected with the controller of the device to interface, i.e. send or receive the data or data packets, with the controller.

According to embodiments, the first wireless network 210 and the second wireless network 310 may utilize or operate according to a wireless local area network protocol such as an IEEE 802.11 protocol, particularly a network according to IEEE 802.11b/g/n, but also a network according to IEEE 802.11a/h/ac/ad or IEEE 802.11ax. The invention is not limited to the use of any specific wireless network protocol, and suitable protocols may further include wireless transmission or network protocols such as BLE, ZigBee Z-Wave, 2G, 3G, 4G, LTE, NB-IoT, SigFox, Weightless-N/P/W or the like. The wireless networks 210, 310, particularly the second wireless network 310, may include sub-networks configured for the use of different wireless network protocols, e.g. between two or more client devices.

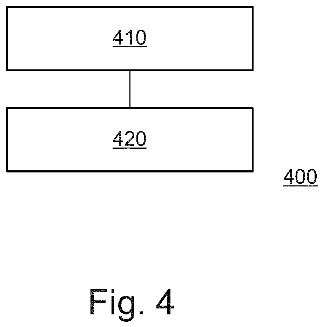

Referring now to Fig. 4, a method 400 of operating an elevator system is described. The elevator system can be an elevator system according to embodiments described herein, such as the elevator system 100, 200, 300. The elevator system has a control unit, a user interface unit and a first access point unit. The method includes connecting 410 the first access point unit, the control unit and the user interface unit in a first wireless network. The connection may be a wireless local area network connection according to IEEE 802.11. Additionally, or alternatively, the control unit may be connected to the first wireless network, e.g. via a wired connection, such as the wired connection 220. The method may include maintaining the connection, preferably reliably maintaining the connection. The connection may be reliably maintained by adjusting the signal strength, signal frequency and signal-to-noise ratio of the devices connected to the first wireless network according to embodiments described herein.

The method 400 further includes connecting 420 the control unit with at least a first client device of a plurality of client devices in a second wireless network. The control unit includes a second access point unit of the second wireless network. The method can include connecting the at least first client device to the second access point unit. The first wireless network and the second wireless network may operate independently from one another.

The method 400 may include disconnecting or allowing to disconnect client devices of the plurality of client devices from the second network. The method 400 may include reconnecting disconnected client devices to the second wireless network. The method 400 may include adjusting the second wireless network or the devices connected or connectable to the second wireless network to not interfere with the first wireless network, e.g. according to embodiments described herein. The method 400 may include limiting the signal strength of transmissions within the second wireless network to not interfere with the first wireless network. The method 400 may include transiently connecting or disconnecting client devices from the plurality of client devices to the second network.

According to embodiments, the operations 410 and 420, as well as any of the operations according to embodiments described herein, may be performed independently from one another, for any number of times and in any order. Particularly, operation 420 may be performed repeatedly for each of a plurality of client devices.

According to embodiments, the method 400 of operating an elevator system may include recording a user input signal representing a user input, such as a destination call entered by a user, with the user interface unit. The user input signal is transmitted, by the user interface unit connected to the first wireless network, within the first wireless network. The user input signal may be encoded, by the user interface unit, as a data packet, such as a TCP/IP packet, transmittable over the first wireless network, and the data packet may include destination data, such as e.g. a destination IP address, provided in a TCP/IP header. The destination data may correspond to an IP address of the control unit. The user input signal may be transmitted from the user interface unit to the first access point unit and from the first access point unit to the control unit. The data packet may be transmitted wirelessly, i.e. as a radio signal, to the first access point unit, and subsequently routed and transmitted wirelessly by the first access point unit, according to the destination data, to the control unit. The user input signal may then be processed in the control unit, and the elevator system may be operated according to the processed user input signal by the control unit.

According to embodiments, the method 400 may include transmitting an alarm signal within the first wireless network. The alarm signal may be a user input signal such as the user input signal according to embodiments described herein, and the alarm signal may be transmitted from the user input unit to the first access point according to embodiments described herein. The alarm signal may include a data packet to be routed to a device connected to an external network, such as network 172. The access point may provide a connection between the first wireless network and the network 172. The method 400 may include establishing a support connection, particularly a bidirectional support connection, such as a voice over IP connection or an audio-visual stream, between the user input unit a device and a device communicatively connected to the external network, particularly following receiving a user alarm call by the user input unit, or transmitting an alarm signal within the first wireless network. The support connection may allow a passenger of the elevator system and a support technician to communicate with one another, and allow the support technician to assist the passenger or perform a service in response to the alarm call.

According to embodiments, the method 400 may include transmitting a control signal within the second wireless network. The control signal may be transmitted from the control unit to a client device. The control signal may include control instructions for the client device. The client device may, for example, be a door controller, such as the elevator car door controller 140 or the landing door controller 130, 132, 134, and the control signal may include a "door open" or a "door close" command. The control signal may be encoded, by the control unit, as a data packet, such as a TCP/IP packet, transmittable over the second wireless network, and the data packet may include destination data, such as a destination data provided in a TCP/IP header. The destination data may correspond to an IP address of the client device. The control signal may be transmitted from the control unit, from the second access point unit of the control unit, to the client device. The data packet may be transmitted wirelessly, i.e. as a radio signal, to the client device. The control signal may then be processed in the client device, and the component of the elevator system controllable by the client device may be operated according to the processed control signal by the client device.

According to embodiments, the first wireless network 210 may be an alarm network, particularly suitable for reliable communication. According to embodiments, the second wireless network 310 may be a control network, particularly suitable for the communication between a controller, such as the control unit 150, and a client device, the communication being particularly suitable for the sending and receiving of control data, sensor data, status data, or the like. The second wireless network 310 may be suitable for intermittent communication between devices, i.e. communication within the second wireless network 310 may be interruptible, at least for parts of the network, without resulting in an error or unsafe state within the elevator system 100, 200, 300.

According to embodiments, the use of a control unit 150, a user interface unit 160 and a first access point unit 170 according to embodiments is described. The use may include providing at least one of the control unit 150, the user interface unit 160 and/or the first access point unit 170according to embodiments described herein. The use may include operating the control unit 150, the user interface unit 160 and/or the first access point unit 170 according to embodiments of the method 400 of operating an elevator system described herein.

For elevator systems or in methods of operating an elevator system according to embodiments described herein, both the first wireless network 210 and a second wireless network 310 may often be providable without significant interference between the wireless networks 210, 310, i.e. both the first and the second wireless network may provide a stable connection for all the devices described herein. In rare cases where such a stable connection is interrupted, in the elevator system or method of operating an elevator system according to embodiments described herein, the first wireless network 210 may be more stable than in conventional elevator systems, and thus beneficially provide most or even all of the required functions for operating the elevator system 100, 200, 300, even when portions of the second wireless network 310 may fail or be unstable. This may beneficially increase the safety and reliability of an elevator system. According to embodiments, even in rare cases where the control unit 150 fails, which may result in an inoperable elevator system, the passenger can still utilize an alarm call function, since the user interface unit 160 can operate independent from the control unit 150 and independently connect to the first access point unit 170. Thus, the elevator system or method of operating an elevator system can be safer and more reliable than known elevator systems or methods of operating an elevator system.

## Claims

1. An elevator system (100, 200, 300), the elevator system (100, 200, 300) comprising:
a control unit (150), which control unit (150) moves with an elevator car (110) of the elevator system (100, 200, 300);
a user interface unit (160), which user interface unit (160) is a car operating panel provided within the elevator car (110) of the elevator system (100, 200, 300), wherein the car operating panel includes an interface (164) configured for user interaction; and
a first access point unit (170); wherein
the first access point unit (170) is configured as an access point of a first wireless network (210), wherein
the first access point unit (170) and the user interface unit (160) are configured to communicate within the first wireless network (210); and wherein
the control unit (150) includes a second access point unit, wherein
the second access point unit is configured as an access point of a second wireless network (310), wherein
the second access point unit is configured to communicate with a plurality of client devices within the second wireless network (310), wherein the plurality of client devices comprises at least one selected from the group consisting of: an elevator car door controller (140), a landing door controller (130, 132, 134), and/or a landing operating panel (131, 133, 135); and wherein
the first access point unit (170) and the user interface unit (160) are configured for sending and receiving an alarm signal therebetween within the first wireless network (210) independent of the control unit (150), and wherein
the control unit (150) is communicatively connected to the first access point unit (170) for communicating with the user interface unit (160).

2. The elevator system (100, 200, 300) according to claim **1,** wherein the control unit (150) is configured to communicate within the first wireless network (210) and/or is configured to communicate with the first wireless network (210) over a wired connection (220) to the first access point unit (170).

3. The elevator system (100, 200, 300) according to claim 1 or 2, wherein the elevator system (100, 200, 300) further comprises the plurality of client devices, and wherein at least one of the plurality of client devices is configured to communicate with the second access point unit within the second wireless network (310).

4. The elevator system (100, 200, 300) according to any of the preceding claims, wherein the plurality of client devices further comprises at least one landing lantern.

5. The elevator system (100, 200, 300) according to any of the preceding claims, wherein the user interface unit (160) comprises an alarm call function, a microphone and/or a loudspeaker.

6. The elevator system (100, 200, 300) according to any of the preceding claims, wherein the first access point unit (170) is stationary with respect to the elevator system (100, 200, 300).

7. The elevator system (100, 200, 300) according to any of the preceding claims, wherein the control unit (150) comprises
an optional first radio module (152) for transmitting and receiving information within the first wireless network (210), and/or
a second radio module (154) for transmitting and receiving information within the second wireless network (310).

8. The elevator system (100, 200, 300) according to any of the preceding claims, wherein the first wireless network (210) and the second wireless network (310) operate on different frequency bands or different channels.

9. The elevator system (100, 200, 300) according to any of the preceding claims, wherein the control unit (150) is a car control unit provided on or within an elevator car (110) of the elevator system (100, 200, 300) and/or wherein the control unit (150) is a main control unit (150) of the elevator system (100, 200, 300).

10. A method (400) of operating an elevator system (100, 200, 300), the elevator system (100, 200, 300) comprising:
a control unit (150), which control unit (150) moves with an elevator car (110) of the elevator system (100, 200, 300);
a user interface unit (160), which user interface unit (160) is a car operating panel provided within the elevator car (110) of the elevator system (100, 200, 300), wherein the car operating panel includes an interface (164) configured for user interaction; and
a first access point unit (170); the method comprising:
- communicatively connecting (410) the first access point unit (170) and the user interface unit (160) in a first wireless network (210);
- communicatively connecting the control unit (150) to the first access point unit (170) for communicating with the user interface unit (160),
- communicatively connecting (420) the control unit (150) with at least a first client device of a plurality of client devices in a second wireless network (310), wherein the control unit (150) includes a second access point unit of the second wireless network (310) and wherein the plurality of client devices comprises at least one selected from the group consisting of: an elevator car door controller (140), a landing door controller (130, 132, 134), and/or a landing operating panel (131, 133, 135) ,and
recording a user input signal representing a user input with the user interface unit (160) and
transmitting the user input signal from the user interface unit (160) to the first access point unit (170) within the first wireless network (210) and from the first access point unit (170) to the control unit (150).

11. The method (400) according to claim 10, wherein the method comprises transmitting an alarm signal within the first wireless network (210).

12. The method (400) according to claim 10 or 11, wherein the method comprises transmitting a control signal within the second wireless network (310).

13. Use of a control unit (150), a user interface unit (160) and a first access point unit (170) according to any of the claims 1 to 9 in an elevator system.

## Patentansprüche

1. Ein Aufzugssystem (100, 200, 300), wobei das Aufzugssystem (100, 200, 300) umfasst:
eine Steuereinheit (150), wobei sich die Steuereinheit (150) mit einer Aufzugskabine (110) des Aufzugssystems (100, 200, 300) bewegt;
eine Benutzerschnittstelleneinheit (160), wobei die Benutzerschnittstelleneinheit (160) ein Kabinentableau ist, das in der Aufzugskabine (110) des Aufzugssystems (100, 200, 300) vorgesehen ist, wobei das Kabinentableau eine Schnittstelle (164) enthält, die für eine Benutzerinteraktion konfiguriert ist; und
eine erste Zugangspunkteinheit (170); wobei
die erste Zugangspunkteinheit (170) als ein Zugangspunkt eines ersten drahtlosen Netzwerks (210) konfiguriert ist, wobei
die erste Zugangspunkteinheit (170) und die Benutzerschnittstelleneinheit (160) konfiguriert sind, um innerhalb des ersten drahtlosen Netzwerks (210) zu kommunizieren; und wobei
die Steuereinheit (150) eine zweite Zugangspunkteinheit enthält, wobei
die zweite Zugangspunkteinheit als ein Zugangspunkt eines zweiten drahtlosen Netzwerks (310) konfiguriert ist, wobei
die zweite Zugangspunkteinheit konfiguriert ist, um mit einer Vielzahl von Client-Geräten innerhalb des zweiten drahtlosen Netzwerks (310) zu kommunizieren, wobei die Vielzahl von Client-Geräten mindestens eines umfasst, das aus der Gruppe ausgewählt ist, die besteht aus: einer Aufzugskabinentürsteuerung (140), einer Schachttürsteuerung (130, 132, 134) und/oder einem Stockwerktableau (131, 133, 135); und wobei
die erste Zugangspunkteinheit (170) und die Benutzerschnittstelleneinheit (160) zum Senden und Empfangen eines Alarmsignals zwischen ihnen innerhalb des ersten drahtlosen Netzwerks (210) unabhängig von der Steuereinheit (150) konfiguriert sind, und wobei
die Steuereinheit (150) kommunikativ mit der ersten Zugangspunkteinheit (170) verbunden ist, um mit der Benutzerschnittstelleneinheit (160) zu kommunizieren.

2. Aufzugssystem (100, 200, 300) nach Anspruch **1,** wobei die Steuereinheit (150) so konfiguriert ist, dass sie innerhalb des ersten drahtlosen Netzwerks (210) kommuniziert und/oder so konfiguriert ist, dass sie mit dem ersten drahtlosen Netzwerk (210) über eine drahtgebundene Verbindung (220) zu der ersten Zugangspunkteinheit (170) kommuniziert.

3. Aufzugssystem (100, 200, 300) nach Anspruch 1 oder 2, wobei das Aufzugssystem (100, 200, 300) ferner die Mehrzahl von Client-Geräten umfasst, und wobei mindestens eines der Mehrzahl von Client-Geräten so konfiguriert ist, dass es mit der zweiten Zugangspunkteinheit innerhalb des zweiten drahtlosen Netzwerks (310) kommuniziert.

4. Aufzugssystem (100, 200, 300) nach einem der vorhergehenden Ansprüche, wobei die Mehrzahl der Kundengeräte ferner mindestens eine Haltestellenlaterne umfasst.

5. Aufzugssystem (100, 200, 300) nach einem der vorhergehenden Ansprüche, wobei die Benutzerschnittstelleneinheit (160) eine Alarmruffunktion, ein Mikrofon und/oder einen Lautsprecher umfasst.

6. Aufzugssystem (100, 200, 300) nach einem der vorhergehenden Ansprüche, wobei die erste Zugangspunkteinheit (170) in Bezug auf das Aufzugssystem (100, 200, 300) stationär ist.

7. Aufzugssystem (100, 200, 300) nach einem der vorhergehenden Ansprüche, wobei die Steuereinheit (150) umfasst
ein optionales erstes Funkmodul (152) zum Senden und Empfangen von Informationen innerhalb des ersten drahtlosen Netzwerks (210), und/oder
ein zweites Funkmodul (154) zum Senden und Empfangen von Informationen innerhalb des zweiten drahtlosen Netzwerks (310).

8. Das Aufzugssystem (100, 200, 300) nach einem der vorhergehenden Ansprüche, wobei das erste drahtlose Netzwerk (210) und das zweite drahtlose Netzwerk (310) auf unterschiedlichen Frequenzbändern oder unterschiedlichen Kanälen arbeiten.

9. Aufzugssystem (100, 200, 300) nach einem der vorhergehenden Ansprüche, wobei die Steuereinheit (150) eine Kabinensteuereinheit ist, die an oder innerhalb einer Aufzugskabine (110) des Aufzugssystems (100, 200, 300) vorgesehen ist, und/oder wobei die Steuereinheit (150) eine Hauptsteuereinheit (150) des Aufzugssystems (100, 200, 300) ist.

10. Ein Verfahren (400) zum Betreiben eines Aufzugssystems (100, 200, 300), wobei das Aufzugssystem (100, 200, 300) Folgendes umfasst:
eine Steuereinheit (150), wobei sich die Steuereinheit (150) mit einer Aufzugskabine (110) des Aufzugssystems (100, 200, 300) bewegt;
eine Benutzerschnittstelleneinheit (160), wobei die Benutzerschnittstelleneinheit (160) ein Kabinentableauist, das in der Aufzugskabine (110) des Aufzugssystems (100, 200, 300) vorgesehen ist, wobei das Kabinentableaueine Schnittstelle (164) enthält, die für eine Benutzerinteraktion konfiguriert ist; und
eine erste Zugangspunkteinheit (170); das Verfahren umfasst:
- kommunikatives Verbinden (410) der ersten Zugangspunkteinheit (170) und der Benutzerschnittstelleneinheit (160) in einem ersten drahtlosen Netzwerk (210);
- kommunikative Verbindung der Steuereinheit (150) mit der ersten Zugangspunkteinheit (170), um mit der Benutzerschnittstelleneinheit (160) zu kommunizieren,
- kommunikatives Verbinden (420) der Steuereinheit (150) mit mindestens einer ersten Client-Vorrichtung einer Vielzahl von Client-Vorrichtungen in einem zweiten drahtlosen Netzwerk (310), wobei die Steuereinheit (150) eine zweite ZugangspunktEinheit des zweiten drahtlosen Netzwerks (310) enthält und wobei die Vielzahl von Client-Vorrichtungen mindestens eine umfasst, die ausgewählt ist aus der Gruppe bestehend aus: einer Aufzugskabinentür-Steuerung (140), einer Stockwerkstür-Steuerung (130, 132, 134) und/oder einem Stockwerktableau (131, 133, 135), und
Aufzeichnen eines Benutzereingabesignals, das eine Benutzereingabe darstellt, mit der Benutzerschnittstelleneinheit (160) und
Übertragen des Benutzereingabesignals von der Benutzerschnittstelleneinheit (160) zu der ersten Zugangspunkteinheit (170) innerhalb des ersten drahtlosen Netzwerks (210) und von der ersten Zugangspunkteinheit (170) zu der Steuereinheit (150).

11. Verfahren (400) nach Anspruch 10, wobei das Verfahren das Übertragen eines Alarmsignals innerhalb des ersten drahtlosen Netzwerks (210) umfasst.

12. Verfahren (400) nach Anspruch 10 oder 11, wobei das Verfahren das Übertragen eines Steuersignals innerhalb des zweiten drahtlosen Netzwerks (310) umfasst.

13. Verwendung einer Steuereinheit (150), einer Benutzerschnittstelleneinheit (160) und einer ersten Zugangspunkteinheit (170) nach einem der Ansprüche 1 bis 9 in einer Aufzugsanlage.

## Revendications

1. Système d'ascenseur (100, 200, 300), le système d'ascenseur (100, 200, 300) comprenant :
une unité de commande (150), qui se déplace avec une cabine d'ascenseur (110) du système d'ascenseur (100, 200, 300) ;
une unité d'interface utilisateur (160), laquelle unité d'interface utilisateur (160) est un panneau de commande de cabine fourni à l'intérieur de la cabine d'ascenseur (110) du système d'ascenseur (100, 200, 300), dans lequel le panneau de commande de cabine comprend une interface (164) configurée pour l'interaction avec l'utilisateur ; et
une première unité de point d'accès (170) ; dans laquelle
le premier point d'accès (170) est configuré comme point d'accès d'un premier réseau sans fil (210), dans lequel
le premier point d'accès (170) et l'interface utilisateur (160) sont configurés pour communiquer au sein du premier réseau sans fil (210) ; et dans lequel
l'unité de commande (150) comprend une deuxième unité de point d'accès, dans laquelle
le deuxième point d'accès est configuré comme point d'accès d'un deuxième réseau sans fil (310), dans lequel
le deuxième point d'accès est configuré pour communiquer avec une pluralité de dispositifs clients au sein du deuxième réseau sans fil (310), dans lequel la pluralité de dispositifs clients comprend au moins un dispositif choisi dans le groupe comprenant : un contrôleur de porte de cabine d'ascenseur (140), un contrôleur de porte palière (130, 132, 134), et/ou un panneau de commande palière (131, 133, 135) ; et dans lequel
le premier point d'accès (170) et l'unité d'interface utilisateur (160) sont configurés pour envoyer et recevoir un signal d'alarme entre eux au sein du premier réseau sans fil (210) indépendamment de l'unité de commande (150), et dans lequel l'unité de commande (150) est connectée de manière communicative à la première unité de point d'accès (170) pour communiquer avec l'unité d'interface utilisateur (160).

2. Système d'ascenseur (100, 200, 300) selon la revendication 1, dans lequel l'unité de commande (150) est configurée pour communiquer au sein du premier réseau sans fil (210) et/ou est configurée pour communiquer avec le premier réseau sans fil (210) via une connexion câblée (220) à la première unité de point d'accès (170).

3. Système d'ascenseur (100, 200, 300) selon la revendication 1 ou 2, dans lequel le système d'ascenseur (100, 200, 300) comprend en outre la pluralité de dispositifs clients, et dans lequel au moins un de la pluralité de dispositifs clients est configuré pour communiquer avec la deuxième unité de point d'accès au sein du deuxième réseau sans fil (310).

4. Le système d'ascenseur (100, 200, 300) selon l'une des revendications précédentes, dans lequel la pluralité de dispositifs clients comprend en outre au moins une lanterne d'atterrissage.

5. Système d'ascenseur (100, 200, 300) selon l'une des revendications précédentes, dans lequel l'unité d'interface utilisateur (160) comprend une fonction d'appel d'alarme, un microphone et/ou un haut-parleur.

6. Système d'ascenseur (100, 200, 300) selon l'une des revendications précédentes, dans lequel la première unité de point d'accès (170) est stationnaire par rapport au système d'ascenseur (100, 200, 300).

7. Système d'ascenseur (100, 200, 300) selon l'une des revendications précédentes, dans lequel l'unité de commande (150) comprend
un premier module radio optionnel (152) pour transmettre et recevoir des informations au sein du premier réseau sans fil (210), et/ou
un deuxième module radio (154) pour transmettre et recevoir des informations au sein du deuxième réseau sans fil (310).

8. Système d'ascenseur (100, 200, 300) selon l'une des revendications précédentes, dans lequel le premier réseau sans fil (210) et le second réseau sans fil (310) fonctionnent sur des bandes de fréquences ou des canaux différents.

9. Le système d'ascenseur (100, 200, 300) selon l'une des revendications précédentes, dans lequel l'unité de commande (150) est une unité de commande de cabine fournie sur ou dans une cabine d'ascenseur (110) du système d'ascenseur (100, 200, 300) et/ou dans lequel l'unité de commande (150) est une unité de commande principale (150) du système d'ascenseur (100, 200, 300).

10. Méthode (400) d'exploitation d'un système d'ascenseur (100, 200, 300), le système d'ascenseur (100, 200, 300) comprenant :
une unité de commande (150), qui se déplace avec une cabine d'ascenseur (110) du système d'ascenseur (100, 200, 300) ;
une unité d'interface utilisateur (160), laquelle unité d'interface utilisateur (160) est un panneau de commande de cabine fourni à l'intérieur de la cabine d'ascenseur (110) du système d'ascenseur (100, 200, 300), dans lequel le panneau de commande de cabine comprend une interface (164) configurée pour l'interaction avec l'utilisateur ; et
une première unité de point d'accès (170) ; la méthode comprend :
- connecter de manière communicative (410) le premier point d'accès (170) et l'unité d'interface utilisateur (160) dans un premier réseau sans fil (210) ;
- connecter de manière communicative l'unité de commande (150) à la première unité de point d'accès (170) pour communiquer avec l'unité d'interface utilisateur (160),
- connecter de manière communicative (420) l'unité de commande (150) avec au moins un premier dispositif client d'une pluralité de dispositifs clients dans un second réseau sans fil (310), dans lequel l'unité de commande (150) comprend une seconde unité de point d'accès du second réseau sans fil (310) et dans lequel la pluralité de dispositifs clients comprend au moins un dispositif choisi dans le groupe consistant en : un contrôleur de porte de cabine d'ascenseur (140), un contrôleur de porte palière (130, 132, 134), et/ou un panneau de commande palière (131, 133, 135) ,et
enregistrer un signal d'entrée de l'utilisateur représentant une entrée de l'utilisateur avec l'unité d'interface utilisateur (160) et
transmettre le signal d'entrée de l'utilisateur de l'unité d'interface utilisateur (160) à la première unité de point d'accès (170) au sein du premier réseau sans fil (210) et de la première unité de point d'accès (170) à l'unité de commande (150).

11. Méthode (400) selon la revendication 10, dans laquelle la méthode comprend la transmission d'un signal d'alarme au sein du premier réseau sans fil (210).

12. Méthode (400) selon la revendication 10 ou 11, dans laquelle la méthode comprend la transmission d'un signal de commande dans le deuxième réseau sans fil (310).

13. Utilisation d'une unité de commande (150), d'une unité d'interface utilisateur (160) et d'une première unité de point d'accès (170) selon l'une des revendications 1 à 9 dans un système d'ascenseur.
